# EUROPÄISCHE PATENTSCHRIFT

(11) **EP 1 984 551 B1**
(45) Veröffentlichungstag und Bekanntmachung des Hinweises auf die Patenterteilung: **14.12.2016**
(21) Anmeldenummer: 07711425.4
(22) Anmeldetag: 01.02.2007
(51) Int. Cl.: D04C 1/06

(54) **ENERGIE ABSORBIERENDE TEXTILE STRUKTUR, INSBESONDERE ZUR VERWENDUNG IM FAHRZEUGBAU, UND VERFAHREN ZU IHRER HERSTELLUNG**
ENERGY-ABSORBING TEXTILE STRUCTURE, IN PARTICULAR FOR USE IN VEHICLE CONSTRUCTION AND METHOD FOR PRODUCING SAID STRUCTURE
STRUCTURE TEXTILE D'ABSORPTION D'ÉNERGIE NOTAMMENT UTILISÉE DANS LA CONSTRUCTION AUTOMOBILE ET PROCÉDÉ POUR LA PRODUIRE

(30) Priorität: 03.02.2006 DE 102006004885
(43) Veröffentlichungstag der Anmeldung: 29.10.2008
(73) Patentinhaber: SGL Kümpers GmbH & Co. KG, 48429 Rheine (DE)
(72) Erfinder: KÜMPERS, Franz-Jürgen, 48429 Rheine (DE); RÜGER, Olaf, 70619 Stuttgart (DE); PFITZER, Hanno, 84095 Furth (DE)
(74) Vertreter: Botzenhardt, Sandra
(86) Internationale Anmeldenummer: PCT/EP2007/000851
(87) Internationale Veröffentlichungsnummer: WO 2007/090556

(56) Entgegenhaltungen:
- EP-A2- 0 249 372
- WO-A-95/30532
- US-A- 1 780 515
- US-A- 5 979 288

## Beschreibung

Die Erfindung betrifft eine Energie absorbierende textile Struktur mit den Merkmalen des Oberbegriffes des Anspruches 1 und ein Verfahren zur Herstellung der textilen Struktur.

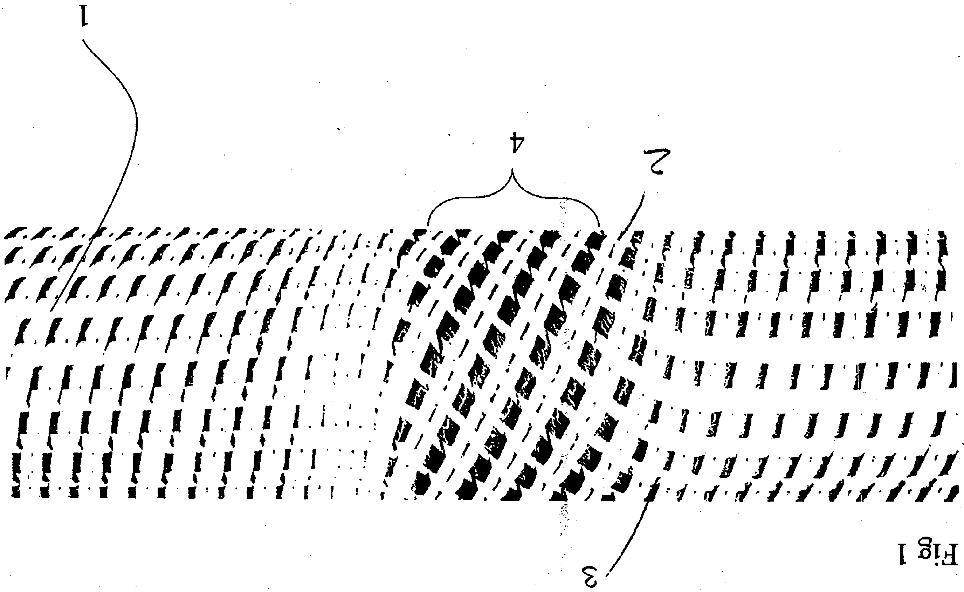

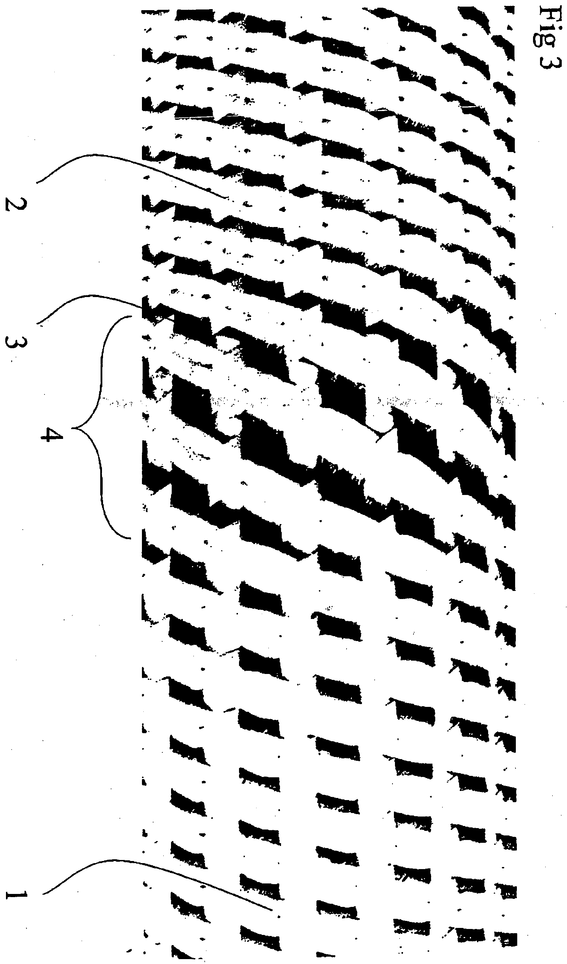

Die WO 95/30532 A enthält eine Vielzahl von Varianten von Auslegern von Segeln, die zum Beispiel gemäß Figur 1 eine gekrümmte Struktur aufweisen. Wie bei textile Strukturen enthaltenden Formkörpern dem Fachmann geläufig ist, wird zunächst eine textile Struktur (Preform) hergestellt, die in diesem Fall auch vorgehärtet wird. Die textile Struktur besteht aus einer Vielzahl konzentrischer Schichten, die sich in ihrem Aufbau unterscheiden. Dabei soll verhindert werden, dass beim sich anschließenden Biegen in die endgültige Form auf der Innenseite der Biegung Wellen oder Knicke der Textilstruktur ergeben und auf der Außenseite die Textilstruktur abrutscht. Um diese Nachteile zu vermeiden, werden bis zu drei Fadensysteme, die in unterschiedlichen Winkeln zur Längsachse schraubenlinienförmig angeordnet sind, in ihrer Winkellage bei ihrer Herstellung so angeordnet, dass die spätere Form, die geradlinig oder mehr oder weniger gebogen ist, im Ablagewinkel berücksichtigt wird. Zum Beispiel aus Figur 3 in Verbindung mit dem Text auf Seite 23 ist zu entnehmen, dass drei Fadensysteme, die in einem bestimmten Winkel zueinander in einem geradlinigen Teil angeordnet sind, für einen später gebogenen Abschnitt alle 3 in einem bestimmten Winkel geneigt werden.

Durch die EP 0 249 372 A2 ist ein faserverstärkter Ski bekannt, wobei der Flechtwinkel über die Länge des Skis variiert. Bei diesem bekannten Ski kommt es darauf an, Zonen mit unterschiedlicher Flexibilität zu bilden, wodurch erreicht werden soll, dass der Ski über seine Länge eine unterschiedliche Steifigkeit besitzt und dadurch hinsichtlich der bestimmungsgemäßen Nutzung optimiert ist.

Energie absorbierende Strukturen werden heute noch im Wesentlichen durch metallische Strukturen gebildet, die durch plastische Verformung Energie aufnehmen. Diese metallischen Strukturen haben jedoch den Nachteil eines hohen Gewichtes im Verhältnis zur Energieabsorption. Aus diesem Grund ist man auch schon dazu übergegangen, die metallischen Strukturen durch textile Strukturen zu ersetzen, die hochfeste Fasermaterialien enthalten. Diese besitzen eine hohe gewichtsspezifische Energieaufnahme.

Die Energie absorbierenden Strukturen aus hochfesten textilen Materialien werden jedoch nicht, wie die metallischen Werkstoffe plastisch verformt, sondern können, wenn nicht entsprechende Vorsorge getroffen wird, an einer zufälligen Schwachstelle schlagartig versagen, ohne nennenswert Energie aufzunehmen. Deshalb werden bei diesen Strukturen entsprechende Krafteinleitungen vorgesehen durch die ein Triggermechanismus eingeleitet wird, der dafür sorgt, dass das Versagen definiert startet und kontinuierlich voranschreitet.

Diese Krafteinleitungsbereiche wurden nach dem Stand der Technik durch Änderung der Geometrie des Grundkörpers, zum Beispiel durch Schwächung der Wandstärke vorgenommen. Diese Maßnahme ist jedoch relativ aufwendig, da dies in einem nachgeschalteten Bearbeitungsschritt vorgenommen werden muss. Ein weiterer Nachteil besteht darin, dass die geometrischen Trigger dann nicht mehr zuverlässig funktionieren, wenn eine Anbindung anderer Strukturelemente im Krafteinleitungsbereich erfolgt (zum Beispiel Verbindung von Längs- und Querträgern). In diesen Fällen kann Abhilfe nur durch zusätzliche Konstruktionselemente geschaffen werden, die Gewicht und Zusatzkosten mit sich bringen.

Die US 1780515 A zeigt und beschreibt ein Geflecht, in welchem ein wellenförmiges Erscheinungsbild erzeugt werden soll. Das geschieht dadurch, dass zunächst ein reguläres Geflecht erzeugt wird, welches auch längs gerichtete Fäden, also Stehfäden, aufweist. Dieses an sich fertige Gewirke wird durch anschließende kontinuierliche wellenförmige Verformung quer zur Längsrichtung des Gewirkes zu dem genannten Enderzeugnis mit wellenförmigem Erscheinungsbild umgewandelt. Dieses Dokument beschreibt eine optisch wirksame Veränderung des Geflechts und durch die Aufnahme von Verformungsenergie eine Energie absorbierende Struktur.

Es ist deshalb Aufgabe der Erfindung, eine Energie absorbierende textile Struktur zu entwickeln, die mit einfachen Mitteln herstellbare, zuverlässige Krafteinleitungsbereiche enthält und ein Verfahren zur Herstellung der erfindungsgemäßen Struktur vorzuschlagen.

Diese Aufgabe wird durch die kennzeichnenden Merkmale des Anspruches 1 beziehungsweise verfahrensseitig durch die Merkmale des Anspruches 7 gelöst.

Die Erfindung ist durch die Ansprüche 2 bis 6 und 7 bis 9 weitergebildet.

Die erfindungsgemäße Änderung der aus Fäden bestehenden Faserstruktur ist nicht nur mit einfachen Mitteln und nahezu ohne Zusatzaufwand zu realisieren, sondern sorgt auch für eine zielgerichtete, einstellbare und zuverlässige lokale Schwächung der Struktur. Dadurch entsteht ein definierter Krafteinleitungsbereich, der für ein definiertes Starten und Voranschreiten des Versagens der Struktur sorgt.

Neben einem steuerbaren und reduzierten Anfangslastniveau wird im Prozess der weiteren Verformung eine hohe Energieabsorption aufrechterhalten. Auf diese Weise wird der Verzögerungsprozess zum Beispiel eines Kraftfahrzeuges beim Aufprall auf einen Widerstand optimiert. Außerdem hat sich gezeigt, dass die Anbindung anderer Strukturelemente im Krafteinleitungsbereich nicht oder nur unwesentlich die Wirkung des Triggers beeinträchtigt. Damit eignet sich eine erfindungsgemäße Struktur auch für komplexe Krafteinleitungsgeometrien.

Eine Richtungsänderung der Stehfäden, die die wesentliche Kraftaufnahme sichern, führt zu eine sehr wirksamen Schwächung der Krafteinleitung und damit einer klaren Definition des Krafteinleitungsbereiches.

Die Richtungsänderung ist vorzugsweise vorübergehend, da die übrigen Bereiche außerhalb der Krafteinleitungszone ein hohes Maß an Energieabsorption aufzubringen haben.

Es hat sich gezeigt, dass eine dreimalige Richtungsänderung eine recht deutliche Reduzierung der Lastspitze ergibt, so dass keine zu hohe Anfangsverzögerung eintritt.

Eine Änderung des Flechtwinkels führt ebenso zu einer lokalen Veränderung der Struktur. Allerdings ist eine alleinige Änderung des Flechtwinkels nur dann spürbar wirksam, wenn die Winkelabweichung relativ deutlich ist. Deshalb ist es sinnvoll, die Änderung des Flechtwinkels mit einer Änderung der Richtung der Stehfäden zu kombinieren.

Prinzipiell ändert sich mit dem Ausmaß der jeweiligen Änderung auch das Ausmaß der Auswirkung auf die Schwächung der Struktur. Dadurch ist durch die Nutzung der Erfindung eine für den jeweiligen Anwendungsfall nahezu maßgeschneiderte Konstruktion realisierbar.

Dazu trägt des Weiteren die Auswahl der Fadenmaterialien im Stehfaden und im Flechtfaden bei. In der Regel kann im Flechtfaden auf ein besonders hochwertiges Material verzichtet werden und zum Beispiel Glasfasern zum Einsatz kommen, während für den Stehfaden vorzugsweise kostenintensivere Kohlefaserfäden verwendet werden.

Das erfindungsgemäße Verfahren zeigt eine sehr kostengünstige und flexible Fertigungsmöglichkeit der erfindungsgemäßen Struktur auf. Feststehende Flechtwerkzeuge und Fadenführer zur Zuführung des Stehfadens erzeugen die erfindungsgemäße Textilstruktur durch Vorschub des Grundkörpers und eine Modifikation dieser Bewegung im Bereich der lokalen Veränderung.

Für die Richtungsänderung der Stehfäden wird eine zusätzliche Drehung des Grundkörpers durchgeführt, während zur Änderung des Flechtwinkels die Vorschubgeschwindigkeit des Grundkörpers im gewünschten Maße modifiziert wird.

Die Erfindung soll nachfolgend anhand von Ausführungsbeispielen näher erläutert werden. In den zugehörigen Zeichnungen zeigen:
Fig. 1 eine erfindungsgemäße textile Struktur mit einem Bereich, in dem sich die Richtung der Stehfäden zwei Mal ändert,
Fig. 2 eine erfindungsgemäße textile Struktur mit einem Bereich, in dem sich die Richtung der Stehfäden drei Mal ändert und
Fig. 3 eine textile Struktur mit einem Bereich, in dem sich die Richtung der Flechtfäden ändert.

Bei der erfindungsgemäßen Variante, die in Figur 1 dargestellt ist, werden die sich längs eines Grundkörpers 1 erstreckenden Stehfäden 3 aus Kohlefasern in einem Bereich 4 zwei Mal in ihrer Richtung ausgelenkt und bilden dadurch eine Schwachstelle in der Struktur, die der gezielten Krafteinleitung dient, das heißt, durch die einerseits die Lastspitze, die den Verformungsvorgang einleitet, begrenzt wird und darüber hinaus eine gezielte Triggerung begünstigt wird, die der kontinuierlich hohen Energieaufnahme während des Verformungsvorganges dient. Die Herstellung dieses Bereiches mit abweichendem Ablagewinkel der Stehfäden 3 erfolgt durch zusätzlich zur Vorschubbewegung des Grundkörpers 1 erfolgende Drehbewegung des Grundkörpers 1 über einen vorgebbaren Winkel.

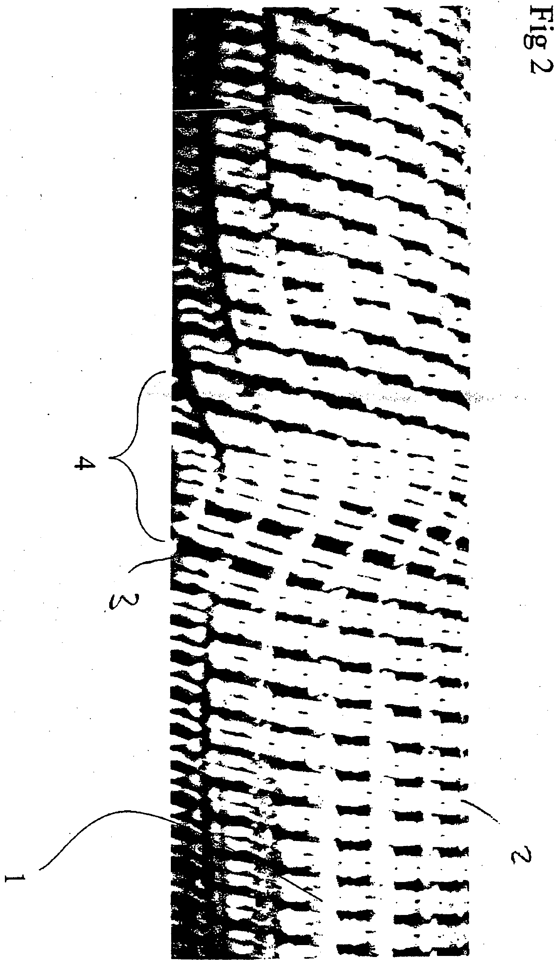

Bei dem Beispiel nach Figur 2 erfolgt der Drehvorgang des Grundkörpers 1 über einen vorgebbaren Winkel hin und zurück. Dadurch Verlaufen die Stehfäden auf beiden Seiten des Bereiches 4 auf gleicher Höhe. Die Wirkung des Bereiches 4 als Krafteinleitungsbereich ist hier besonders intensiv.

Gemäß Figur 3 wird der Flechtwinkel der Flechtfäden des Geflechts 2 im Bereich 4 verändert. Auch dadurch ergibt sich ein Krafteinleitungsbereich, der auf Grund der Änderung der Struktur bewirkt wird. Die alleinige Änderung des Flechtwinkels führt jedoch nicht zu einer vergleichbaren Ausprägung der Schwächung, so dass in der Regel eine Kombination aus ei ner Änderung des Flechtwinkels und der Richtungsänderung der Stehfäden bevorzugt werden wird.

Die Flechtwinkeländerung wird durch eine Änderung der Vorschubgeschwindigkeit des Grundkörpers bewirkt.

## Patentansprüche

1. Energie absorbierende textile Struktur, die zur Kraftaufnahme hochfeste Fäden aufweist, wobei die textile Struktur durch ein Geflecht (2) mit Stehfäden (3) in Krafteinleitungsrichtung gebildet ist und die textile Struktur mindestens einen Bereich (4) einer lokalen Veränderung der aus Fäden bestehenden textilen Struktur (2, 3) aufweist, **dadurch gekennzeichnet, dass** die lokale Veränderung durch eine Richtungsänderung der
Stehfäden (3) zur Ausbildung einer Schwachstelle gebildet ist, wobei die Richtungsänderung eine vorübergehende Änderung ist.

2. Energie absorbierende textile Struktur nach Anspruch 1, **dadurch gekennzeichnet, dass** die Richtungsänderung eine dreimalige Richtungsänderung in entgegengesetzten Richtungen ist.

3. Energie absorbierende textile Struktur nach einem der vorangehenden Ansprüche, **dadurch gekennzeichnet, dass** im Bereich (4) der lokalen Veränderung der Flechtwinkel geändert ist.

4. Energie absorbierende textile Struktur nach einem der vorangehenden Ansprüche, **dadurch gekennzeichnet, dass** mindestens die Stehfäden (3) aus hochfestem Material gebildet sind.

5. Energie absorbierende textile Struktur nach Anspruch 4, **dadurch gekennzeichnet,**
**dass** die Stehfäden (3) aus Kohlefasern gebildet sind.

6. Verwendung der energie absorbierenden textile Struktur nach Anspruch 1, **dadurch gekennzeichnet, dass** sie für die Verwendung im Fahrzeugbau vorgesehen ist.

7. Verfahren zur Herstellung einer Energie absorbierenden textilen Struktur die zur Kraftaufnahme hochfeste Fäden aufweist und durch ein Geflecht (2) mit Stehfäden in Krafteinleitungsrichtung gebildet ist, nach einem der Ansprüche 1 bis 6, wobei beim Flechten auf einen Grundkörper der Grundkörper (1) relativ zu den Flechtwerkzeugen verschoben wird und zur Erzeugung der lokalen Veränderung der aus Fäden bestehenden textilen Struktur die Bewegung des Grundkörpers (1) modifiziert wird **dadurch gekennzeichnet, dass** zur Erzielung der Richtungsänderung der Stehfäden (3) der Grundkörper(1) während der Richtungsänderung zusätzlich zur Vorschubbewegung zur Ausbildung einer Schwachstelle gedreht wird, wobei die Richtungsänderung eine Vorübergehende Änderung ist.

8. Verfahren nach Anspruch 7, **dadurch gekennzeichnet, dass** die Drehbewegung des Grundkörpers (1) der gewollten Richtungsänderung angepasst wird.

9. Verfahren nach einem der Ansprüche 7 bis 8, **dadurch gekennzeichnet, dass** zur Änderung des Flechtwinkels die Vorschubbewegung des Grundkörpers (1) Während der Herstellung der lokalen Veränderung dem Ausmaß der gewünschten Flechtwinkeländerung angepasst wird.

## Claims

1. Energy-absorbing textile structure which comprises high-strength yarns for force absorption, the textile structure being formed by a braid (2) that comprises stationary yarns (3) in the force-application direction and the textile structure comprising at least one region (4) of a local variation to the textile structure (2, 3) consisting of yarns, **characterised in that** the local variation is formed by a change in the direction of the stationary threads (3) in order to form a weak point, the change in direction being a temporary change.

2. Energy-absorbing textile structure according to claim 1, **characterised in that** the change in direction is a change in direction that happens three times in opposite directions.

3. Energy-absorbing textile structure according to any of the preceding claims, **characterised in that** the braid angle is changed in the region (4) of the local variation.

4. Energy-absorbing textile structure according to any of the preceding claims, **characterised in that** at least the stationary yarns (3) are made of high-strength material.

5. Energy-absorbing textile structure according to claim 4, **characterised in that** the stationary yarns (3) are made of carbon fibres.

6. Use of the energy-absorbing textile structure according to claim 1, **characterised in that** said structure is provided for use in vehicle construction.

7. Method for producing an energy-absorbing textile structure which comprises high-strength yarns for force absorption and is formed by a braid (2) which comprises stationary yarns in the force-application direction according to any of claims 1 to 6, a main body (1) being displaced relative to the braiding tools during braiding onto the main body and the movement of the main body (1) being modified in order to produce the local variation in the textile structure consisting of yarns, **characterised in that**, in order to achieve the change in direction of the stationary yarns (3) the main body (1) is rotated during the change in direction, in addition to the advance movement, in order to form a weak point, the change in direction being a temporary change.

8. Method according to claim 7, **characterised in that** the rotational movement of the main body (1) is adapted to the desired change in direction.

9. Method according to any of claims 7 to 8, **characterised in that**, in order to change the braid angle, the advance movement of the main body (1) is adapted to the size of the desired braid-angle change during production of the local variation.

## Revendications

1. Structure textile d'absorption de l'énergie qui présente des fils à très forte résistance destinés à l'absorption de force, dans laquelle la structure textile est formée par un entrelacement (2) comprenant de fils droits (3) dans le sens d'application de la force et la structure textile présente au moins une zone (4) d'une modification locale de la structure textile (2, 3) composée de fils, **caractérisée en ce que** la modification locale est formée par une modification de la direction des fils droits (3) en vue de la formation d'un point faible, dans laquelle la modification de la direction est une modification temporaire.

2. Structure textile d'absorption de l'énergie selon la revendication 1, **caractérisée en ce que** la modification de la direction est une triple modification de la direction dans des directions opposées.

3. Structure textile d'absorption de l'énergie selon l'une des revendications précédentes, **caractérisée en ce que** l'angle de tressage est modifié dans la zone (4) de la modification locale.

4. Structure textile d'absorption de l'énergie selon l'une des revendications précédentes, **caractérisée en ce que** les fils droits (3), au moins, sont constitués d'un matériau à très forte résistance.

5. Structure textile d'absorption de l'énergie selon la revendication 4, **caractérisée en ce que** les fils droits (3) sont constitués de fibres de carbone.

6. Utilisation de la structure textile d'absorption de l'énergie selon la revendication 1, **caractérisée en ce que** celle-ci est prévue pour un usage dans la construction automobile.

7. Procédé destiné à la fabrication d'une structure textile d'absorption de l'énergie, qui présente des fils à très forte résistance destinés à l'absorption de force et qui est formée par un entrelacement (2) comprenant de fils droits dans le sens d'application de la force, selon l'une des revendications 1 à 6, dans laquelle lors du tressage sur un corps de base, le corps de base (1) est décalé par rapport aux outils de tressage et le mouvement du corps de base (1) est modifié en vue de produire la modification locale de la structure textile composée de fils, **caractérisé en ce que**, afin de générer la modification de la direction des fils droits (3), le corps de base (1), en plus du mouvement d'avance, est soumis à un mouvement rotatif pendant le changement de la direction en vue de la formation d'un point faible, dans lequel la modification de la direction est une modification temporaire.

8. Procédé selon la revendication 7, **caractérisé en ce que** le mouvement de rotation du corps de base (1) est adapté à la modification voulue de la direction.

9. Procédé selon l'une des revendications 7 à 8, **caractérisé en ce que**, en vue de la modification de l'angle de tressage, le mouvement d'avance du corps de base (1) est adapté à l'ampleur de la modification souhaitée de l'angle de tressage pendant la génération de la modification locale.
